# EUROPEAN PATENT APPLICATION

(11) **EP 3 150 569 A1**
(43) Date of publication of application: **05.04.2017**
(21) Application number: 16190908.0
(22) Date of filing: 27.09.2016
(51) Int. Cl.: C05F 11/00, C05F 5/00, C05F 17/00

(54) **A METHOD FOR PRODUCING A FERTILISATION PRODUCT FROM ANAEROBIC DIGESTATE**

(30) Priority: 29.09.2015 GB 201517203
(71) Applicant: Suggitt, Sarah Elizabeth, Attleborough Norfolk NR17 1AN (GB); Suggit, Steven, Attleborough Norfolk NR17 1AN (GB)
(72) Inventor: SUGGITT, Sarah, Attleborough, NR17 1AN (GB); SUGGITT, Stephen, Attleborough, NR17 1AN (GB)
(74) Representative: ip21 Ltd

(57) **Abstract**

A method of treating a digestate material, comprising the steps of obtaining an anaerobically produced digestate exerting pressure on the digestate to remove water from the digestate to form a low-water digestate and including the further step of filtering the low-water digestate filtered through a filtration means.

## Description

### Field of the Invention

The invention relates to methods for producing a fertilisation medium and is particularly suited to produce a compost for horticultural uses. In particular, the methods relate to a modified Anaerobic Digestion (AD) process which converts waste plant matter into energy, but also to a usable product form.

### Background to the Invention

In the art, processes usually referred to as Anaerobic Digestion are well known. Generally, organic material, often a waste product from a separate process, is converted into a more readily useable form, whilst at the same time also generating energy from combustion of methane, produced as a by-product in the digestion process. Feed-stocks into the Anaerobic Digestion process can be most biodegradable materials and can include plant material, food leftovers as well as animal waste. Materials having a high lignin content are usually not treated as the lignin is not easily broken down in the conditions found in Anaerobic Digesters.

Once a suitable feed stock is chosen, it is mixed with a microorganism under oxygen free conditions at a temperature suitable for the microorganism. Usually this is at around 30°C to 38°C, although some microorganisms function most efficiently and effectively at a higher temperature at around 50°C or even higher: approximately 70°C. Prior to mixing, the particle size of the feed stock can be reduced to increase the surface area available to the microorganism.

The microorganisms act to break down the feed stock producing, for example methane fuel. As a by-product in the process a material, known as a digestate, is produced which cannot be utilised by the microbes. In one type of process, quite often an acidogenic process, the digestate produced is solid: the solid nature often being caused by the processing of lignin or high molecular weight cellulosics. Another form of material, a liquid digestate which is rich in plant nutrients can also be produced, either as the main product, as in a methanogenic process, or removed from the solid material.

Digestates are used primarily as soil conditioners in agricultural environments. They are known to aid plant growth and also inhibit certain plant diseases as well as also causing the crop to have an increased resistance to said diseases. Additionally, the texture of the soil is improved by use of the solid digestate material.

In addition to the above, digestates are good sources of nutrients for plants, providing elements in a readily accessible form. One drawback of digestates currently produced is that their form, in relation to horticultural as opposed to agricultural uses is concerned, is not suitable for said horticultural uses. The presence of certain microorganisms can give rise to problems. Currently used digestate material can firstly leave solid material on the leaves, particularly as the application in horticultural uses is foliar. Additionally, presently available digestates are too viscous and are normally applied as a root/soil feed. Rye digestate in particular is too coarse and would require maceration prior to use.

It is an object of the present invention to provide a method of digestate treatment which addresses the above problems and provides processed digestate materials suitable for horticultural use.

### Summary of the Invention

According to a first aspect of the invention there is provided a method of treating a digestate material, comprising the steps of:
obtaining an anaerobically produced digestate;
exerting pressure on the digestate to remove water from the digestate to form a low-water digestate;
and including the further step of filtering the low-water digestate through a filtration means.

The filtration step changes the average particle size of the product to one which is suitable for use in horticultural applications.

Preferably, the mesh size of the filtration means is selected to be from 0.8 to 2.2mm.

Further preferably, the mesh size of the filtration means is from 1 to 2mm.

Advantageously, the filtering takes place through two successive filtration means, the second filtration means having a finer mesh size than the first filtration means. Further advantageously, the mesh size of the first filtration means is from 0.2 to 1.2mm. The use of a second filtration means enables a finer material to be obtained with lower risk of blocking up the pores of the filtration means.

Preferably, the method includes the further step of deodorisation, which is further preferably achieved by mixing an enzymes and/or bacteria with the dried and filtered product. This allows the removal of unpleasant and noxious odours from the product.

Advantageously, prior to formulation of the low-water digestate, the digestate material is subjected to a pasteurisation step to remove microorganisms which may be detrimental to horticultural products. Further advantageously, the pasteurisation step is carried out at a temperature of from 70°C to 80°C. Yet further advantageously, the pasteurisation step is carried out for a period from 55 to 70 minutes.

Optionally, the raw material is selected from starting materials comprising rye, sugar beet or maize.

### Brief Description of the Drawings

An embodiment of the invention will now be described, by way of example only, with reference to the accompanying drawing, in which:

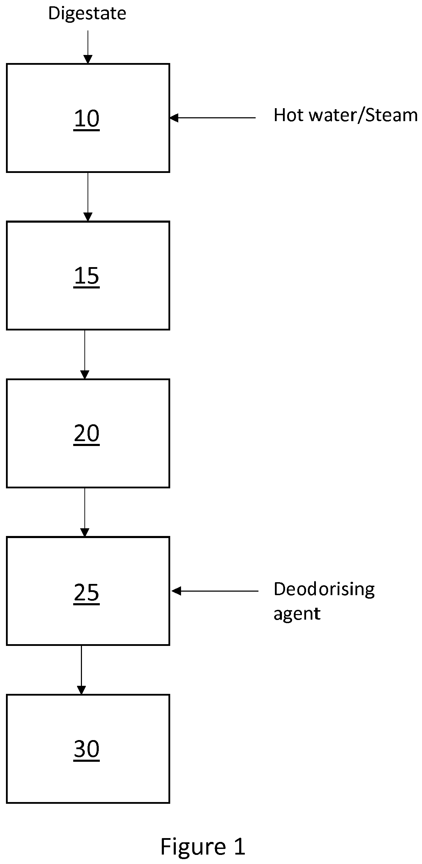

Figure 1 is a flow diagram showing the steps of the process.

### Detailed Description of the Embodiments

The use of the process of Anaerobic Digestion to treat waste organic materials has many advantages known in the art. Firstly, the Anaerobic Digestion uses a starting material, matter which would otherwise be sent for disposal in landfill, which is increasingly in short supply.. Second, the product obtained from the process of Anaerobic Digestion can be used in agriculture as a soil-quality improver, adding fibrous content and also microbes to the soil. Additionally, Anaerobic Digestion products can add to the nutrient value of the soil, replenishing the elements removed by previous crops. The advantages therefore of treating waste organic materials to produce a useful material are great

However, the use of digestate product outside agricultural crops is limited. Especially in horticultural uses, currently used digestate material, because of the nature of the solid particulate material suspended in the product can leave solid material on the leaves. Within horticultural applications, this is particular disadvantageous as application of the material to the crop is mainly foliar. Additionally the present digestates are too viscous and are therefore normally applied as a root/soil feed. Rye digestate in particular is too coarse and would require maceration prior to use.

The present invention aims to extend the application areas of digestate product by providing a treatment of digestate product formed during Anaerobic Digestion.

In its broadest aspect, the invention, provides a method of treating a digestate by compression and filtration along with one or more steps selected from a pasteurisation. and a deodorisation step.

The digestate which forms the starting material for the present invention is produced by means of a Methanogenic Anaerobic Digestion process which normally results in the digestate being a sludge, with a high ammonium and/or phosphate content.

Although the present invention can function when the matter processed by the Anaerobic Digestion is any type of fruit and vegetable material, for example, corn, maize, leaf or root vegetables or fruits, including oranges or orange juice, the preferable starting matter is selected from rye, sugar beet or maize.

In a first embodiment, the digestate is firstly subjected to a pasteurisation step in which microorganisms are killed through the application of elevated temperature. The temperature and residence time of the digestate at that temperature, at this stage needs to be sufficient to kill the microorganisms yet not sufficiently high to cause too great a degradation of organic materials in the digestate. Usually therefore a temperature of from 70°C to 80°C will be utilised.

In the illustrated embodiment, the digestate is fed into a stainless steel tank of volume 20m³. If required a number of tanks can be arranged in close proximity to more efficiently utilise heat and cooling energy. Heating of the digestate is then carried out using conventional means, but can be by hot water or steam, optionally from a power plant engine. In order to ensure that pasteurisation is effectively and efficiently carried out, the heating and also the cooling process is controlled by a fully integrated computer system.

To ensure that there is no cross-contamination between batches of pasteurised and unpasteurised digestate, the tank is provided with a non-return entry valve. Additionally, the exit valves are also non-return valves.

A tank is usually provided with two or more exit valves. The first of the valves allows material from the pasteuriser to be led into a squeezer or compressor for processing as described below. The second valve allows liquid digestate to be fed into a lagoon for use as a nutrient material.

In order to ensure that the process remains within operating parameters, three failsafe systems are included. Firstly, a timer is included to record the length of time that the pasteurisation step has proceeded. The time measured is also communicated to the integrated computer system. In the event the pasteurisation step goes beyond a pre-set time, typically 65 minutes and especially preferably 70 minutes, the system alerts an operator to attend to the matter. The alert can be by means known in the art such as by e-mail or telephone.

Second, in the event of a problem a lift pump transfers liquid digestate to a separate holding tank. Third, a thermometer, preferably electronic is located on the side of each tank, which thermometer is also further preferably linked to a central data station.

Once pasteurisation is achieved, the contents of the tank are passed to a press to reduce the water content of the pasteurised digestate.

It should be acknowledged that the subsequently described processing steps can also be carried out on unpasteurised digestate material.

As an example of a type of pressing apparatus suitable for the use in conjunction with the present invention is a 'Bauer Screw Press'. The Bauer Screw Press utilises a screw, surrounded by a mesh screen, to squeeze water from digestate material, which water passes through the mesh screen for collection/disposal. Depending on the mode of operation of the screw press a moisture content can be set to the desired level; but is typically around 30%. In a further step, the partially-dried digestate can then be dried further to produce pelletised material. The further drying can be achieved using conventional engine driers.

In the present invention, the partially dried or dewatered matter produced from the pressing apparatus is subsequently filtered to yield a product having a particle size distribution suited for use in horticultural applications. In order to provide effective filtering without the requirement to change the filter too frequently, a stainless steel mesh is employed as part of the filter, through which mesh the dried digestate passes.

As an example of suitable mesh sizes, then sieves of mesh size 0.8 to 2.2mm can be used. Mesh sizes of 2mm and 1 mm have been found to be suitable. It has been found to be advantageous to utilise a two-stage filtration process in which partially-dried digestate material is firstly filtered through a coarser sieve and subsequently through a finer sieve. In utilising a two-stage process, the disadvantages of simply filtering through a finer sieve are obviated in that the finer sieve would then be more likely to become blocked and to cease to function.

For example therefore, once the partially dried digestate has passed through a coarser sieve of for example 2mm or 1 mm mesh size, the once-filtered material can be passed through a fine second sieve of for example 1 mm or 0.25mm mesh size.

At the same time as the sieving takes place, any water separated from the sieved material can be collected and can form the basis, along with other liquid collected during the compression stages, for a plant material for use in horticulture.

The sieved solid material, can have an unpleasant and also noxious odour. To remove the odour, a further, deodorisation, step can be undertaken in which a deodorising agent is mixed in with the sieved solid material. For example, an enzyme and/or bacteria can be added which acts to efficiently utilise the molecules causing the odour and converting them to odourless compounds.

Once the processing has finished, the product can be sent to a packaging area to be suitably packaged for dispatch and use.

Referring to Figure 1, digestate is firstly fed into a stainless steel tank 10. The optional pasteurisation step is carried out in batches within a tank of volume around 20 cubic meters. Two or more tanks can be provided which are capable of being run simultaneously. As starting material for the process, any fruit, vegetable or plant matter can be used to produce the digestate and which also includes liquids such as fruit juice including orange juice.

A stainless steel tank 10 is equipped to heat the digestate by passing hot water or steam through a surrounding jacket or pipework within the body of the tank 10. Agitation means can be included in the tank to ensure mixing and efficient heat distribution within the material being treated. The temperature of the digestate is monitored and set to be maintained within a pre-set range, which for the pasteurisation step is from 70 - 80°C. Additionally, a timer measures the length of time the material is within this temperature range, said timer being connected to an alerting system to bring to an operative's attention when a pre-set time or temperature range is not met.

In order to determine the effect of the pasteurisation step on product, the total nitrogen content of a pasteurised material (which had been pasteurised at 75°C) was determined along with samples immediately prior to the pasteurisation step. No dewatering was carried out on the samples. The results showed that there was no statistical difference between the two materials. Two experiments on the pasteurised material gave product having a total nitrogen content of 0.37 and 0.38% m/m respectively, whilst two unpasteurised samples gave values of 0.37 and 0.36% m/m respectively.

Once pasteurisation is complete, the material undergoes a dewatering step in a dewatering apparatus 15, such as the Bauer Screw Press exemplified above. In a further alternative embodiment, any suitable technique is used for the dewatering or squeezing step in the process. Additionally, the dried matter produced by the dewatering step may have a moisture content of any appropriate percentage. The nitrogen sample of a pasteurised sample following the squeezing step was measured at approximately 0.61% m/mN (based on two samples).

The following step of the process is filtration 20 of the dewatered digestate matter. This step comprises filtering the matter through two stainless steel sieves, one at a size of around 2000 microns and the second at a size of around 1000 microns. The importance of this process is to remove any smaller unwanted solids which pass through from the prior squeezing step.
If desired a filtering step can be carried out prior to dewatering or squeezing two samples at such a stage was analysed with the following results:

| Parameter | Result 1 | Result 2 |
|---|---|---|
| Total Nitrogen (N) % m/m | 0.34 | 0.38 |
| Total Phosphorus (a P₂ O₅ % m/m | 0.17 | 0.17 |
| Total Phosphorus (as P) % m/m | 0.076 | 0.073 |
| Water soluble Phosphorus (as P₂ O₅) % m/m | 0.078 | 0.078 |
| Water soluble Phosphorus (as P) % m/m | 0.034 | 0.034 |
| Total Potassium | 0.52 | 0.43 |
| Total Potassium (as K) | 0.43 | 0.36 |
| Specific gravity E.Coli | 1.02 <100 | 1.02 <100 |
| Presumptive enterobacteriaceae Salmonella | <10 Not detected | <10 Not detected |
| Total viable count at 30°C for 48 hr | > 100 000 | > 100 000 |

In order to remove unwanted odours, especially from a liquid product, a deodorising step 25 is carried out. This step involves applying a deodorising agent to the digestate, preferably within the tank, for example and further preferably following the pasteurisation process, or can even take place to the dewatered digestate whilst on a conveyor belt to neutralise any odours. In a preferred embodiment, a specifically designed deodorising enzyme and/or bacteria is used. In a further alternative embodiment, the deodoriser may be any appropriate deodorising material or organism which is to be applied to the dry digestate matter.

The final step of the process is that of packaging 30 in a packaging machine of the type known in the art, in which the product is distributed into packaging, and in this embodiment the liquid portion of the product is distributed into bottles. The solid and the liquid products are then ready for sale to the public. In use, the process will be used to produce bagged or bottled concentrate in a consistent manner which is ready for sale and which can satisfy statutory requirements for such products.

In an alternative embodiment, not illustrated, the dried matter produced in the dewatering apparatus 15 is dried further to produce a third pelletized product. The pelletized product can be provided to users in that form or can be further treated by grinding, using means known in the art, such as a hammer-mill to produce a powdered product. The powdered product is particularly suitable for spreading as part of a horticultural treatment,

## Claims

1. A method of treating a digestate material, comprising the steps of:
obtaining an anaerobically produced digestate;
exerting pressure on the digestate to remove water from the digestate to form a low-water digestate;
and including the further step of filtering the low-water digestate through a filtration means.

2. A method according to claim 1, wherein the mesh size of the filtration means is selected to be from 0.8 to 2.2mm.

3. A method according to claim 1, wherein the mesh size of the filtration means is from 1 to 2mm.

4. A method according to any preceding claim, wherein the filtering step takes place through two successive filtration means, the second filtration means having a finer mesh size than the first filtration means.

5. A method according to claim 1, wherein the mesh size of the first filtration means is from 0.2 to 1.2mm.

6. A method according to any preceding claim, wherein the method includes the further step of deodorisation of the digestate material.

7. A method according to claim 6, wherein deodorisation is achieved by mixing an enzyme with the dried and filtered product.

8. A method according to any preceding claim, wherein, prior to formulation of the low-water digestate, the digestate material is subjected to a pasteurisation step.

9. A method according to claim 8, wherein the pasteurisation step is carried out at a temperature of from 70°C to 80°C.

10. A method according to claim 8 or 9, wherein the pasteurisation step is carried out for a period from 55 to 70 minutes.

11. A method according to any preceding claim, wherein the raw material is selected from starting materials comprising rye, sugar beet or maize.
